# EUROPÄISCHE PATENTANMELDUNG

(11) **EP 1 635 583 A1**
(43) Veröffentlichungstag der Anmeldung: **15.03.2006**
(21) Anmeldenummer: 04021837.2
(22) Anmeldetag: 14.09.2004
(51) Int. Cl.: H04Q 3/00, H04Q 7/38, H04M 3/42

(54) **Verfahren zur Einrichtung und Bereitstellung von Diensten in einem Mobilfunknetz und Administrationseinrichtung zur Durchführung des Verfahrens**

(71) Anmelder: SIEMENS AKTIENGESELLSCHAFT, 80333 München (DE)
(72) Erfinder: Gugerell, Martin, 1080 Wien (AT); Huber, Heinrich Johann, Dr., 1220 Wien (AT); Kain, Albert, 1160 Wien (AT)

(57) **Zusammenfassung**

Die Erfindung betrifft ein schnelles und einfaches Verfahren zur Einrichtung und Bereitstellung von Diensten in einem Mobilfunknetz (10), insbesondere UMTS-Netz, bei dem ein bestimmter Dienst eingerichtet wird, indem aus einem vorgegebenen universellen Dienstprofil eine Dienstbeschreibung des Dienstes in einer Administrationseinrichtung des Mobilfunknetzes (10) erstellt und in Zuordnung zum Mobilfunknetz (10) gespeichert wird.

## Beschreibung

Die Erfindung betrifft ein Verfahren zur Einrichtung und Bereitstellung von Diensten in einem Mobilfunknetz, insbesondere UMTS-Netz, sowie eine entsprechende Administrationseinrichtung.

Ein Dienst in einem Kommunikationsnetz, wie einem Telekommunikations-Festnetz, dem Internet oder einem Mobilfunknetz, spezifiziert eine bestimmte Art der Kommunikation zwischen Endstellen, durch die eine vereinbarte Dienstleistung erbracht wird. Beispielsweise dient ein Sprachdienst der Sprachkommunikation oder dienen Datendienste der Übermittlung von Daten über das Telekommunikationsnetz von/zu einem Endgerät.

Ein Dienst wird im Detail durch eine Mehrzahl von Diensteigenschaften bestimmt, welche etwa die Dienstgüte betreffen, also Eigenschaften wie Übertragungszeit, Verbindungsaufbauzeit, Fehlerraten etc. Im Bereich des Internet und bei modernen UMTS-Mobilfunknetzen spricht man hier auch von der "Quality of Service" (QoS). Weitere Eigenschaften eines Dienstes betreffen die Vergebührung oder Sicherheitsmechanismen (Verschlüsselungsarten zwischen den Endstellen und/oder Einrichtungen im Netzwerk).

Im Internet oder paketorientierten Mobilfunknetzen werden Dienste häufig auf Basis eines Client-Server-Modells erbracht. Hierbei wird auf dem Mobilfunkendgerät eine Anwendung mit einem Client installiert, bspw. für den Email-Versand bzw. -Empfang. Zur Nutzung des Dienstes richtet der Client eine Anfrage an einen Applikationsserver, im Beispiel einen Mailserver. Dieser kann sich im Mobilfunknetz oder in einem separaten Netz befinden. Der Applikationsserver reagiert auf die Anfrage des Clients und sendet beispielsweise für den Benutzer des Endgerätes bestimmte Emails an den Client.

Damit ein Netzbetreiber einen Dienst anbieten kann, muss der Dienst im Netz eingerichtet werden. Hierzu werden zunächst die Anforderungen an den Dienst definiert. Der Betreiber eines klassischen Telekommunikationsnetzes oder GSM-Mobilfunknetzes übergibt die Anforderungen sodann an einen Ausrüster bzw. Hersteller von Netzeinrichtungen. Dieser entwickelt die erforderlichen Zusatzmodule und implementiert diese auf den Netzeinrichtungen des Betreibers. Anpassungen am Administrations-Subnetz des Betreibers ermöglichen dann, dass ein Administrator über ein OAM("Operation, Administration, Maintenance")-Terminal den vorkonfigurierten Dienst über eine speziell hierfür entwickelte Oberfläche einrichten kann.

Konfigurationsmöglichkeiten zur Bereitstellung bzw. Freischaltung des Dienstes für einen Benutzer müssen ebenfalls durch den Ausrüster entwickelt und dem Betreiber zur Verfügung gestellt werden. Damit der Benutzer den Dienst nutzen kann, sind entsprechende manuelle Konfigurationen des Administrators am Benutzerprofil des Benutzers erforderlich. Für eine Mehrzahl von Benutzern ist die Freischaltprozedur durch den Administrator entsprechend oft zu wiederholen.

Somit gestaltet sich die Einrichtung und Freischaltung von Diensten in solchen Netzen langwierig, aufwendig und kostenintensiv.

Um die Einführung neuer Dienste zu beschleunigen, werden an moderne Kommunikationsnetze, insbesondere UMTS-Netze, besondere Anforderungen gestellt. Die Dienste bzw. Anwendungen sollen selbst nicht standardisiert werden, so dass jeder Operator existierende Dienste selbstständig entwickeln oder weiterentwickeln kann. Ferner sollen sich Konzepte zur Einrichtung und Bereitstellung von Diensten an Konzepte anlehnen, wie sie für Anwendungen bzw. Applikationen im Internet-Bereich üblich sind. Stichworte hierzu sind etwa Client-Server-Architektur oder die oben erwähnten QoS-Konzepte.

Die erwünschte Konvergenz zwischen den modernen, paketorientierten Mobilfunknetzen und dem Internet spiegelt sich bspw. darin wieder, dass eine ständig zunehmende Vielfalt von Mobilfunkendgeräten für die Benutzer verfügbar ist. So basieren Endgeräte auf ganz unterschiedlicher Hardware, je nach den Haupteinsatzgebieten (klassisches Endgerät, "Smartphone", PD**A** mit Handyfunktionen, Blackberry, etc.). Die Endgeräte haben unterschiedliche Betriebssysteme, etwa Windows CE oder Symbian OS. Die Endgeräte unterscheiden sich auch in ihrer Flexibilität in Bezug auf zu implementierende Anwendungen; so sind keineswegs alle Endgeräte in der Lage, einen für einen Dienst bzw. eine Anwendung erforderlichen Client, etwa auf Java basierend, herunterzuladen und selbsttätig zu installieren.

Während also in klassischen Netzen die Eigenschaften und Fähigkeiten etwa eines ISDN-Telefons genau bekannt waren, ist dies im UMTS-Umfeld nicht mehr der Fall. Ein Mobilfunknetzbetreiber muss Dienste entwickeln, obwohl er die Eigenschaften und Fähigkeiten der Endgeräte seiner Benutzer gar nicht im Detail kennt. Somit muss auch die nachträgliche Modifikation eines bereits eingerichteten Dienstes möglich sein, ohne dass erneut ein langwieriger Anpassungsprozess erforderlich ist.

Als Beispiel für die oben skizzierten Anforderungen sei ein Dokument genannt, das von der 3GPP ("3rd Generation Partnership Project"), dem Standardisierungsgremium für UMTS-Netze, gepflegt wird: In der technischen Spezifikation TS 22.228 sind die Anforderungen an IP-Multimediadienste niedergelegt, insbesondere für die IMS("IP Multimedia Subsystem")-Domäne von UMTS-Netzen (Kapitel 6).

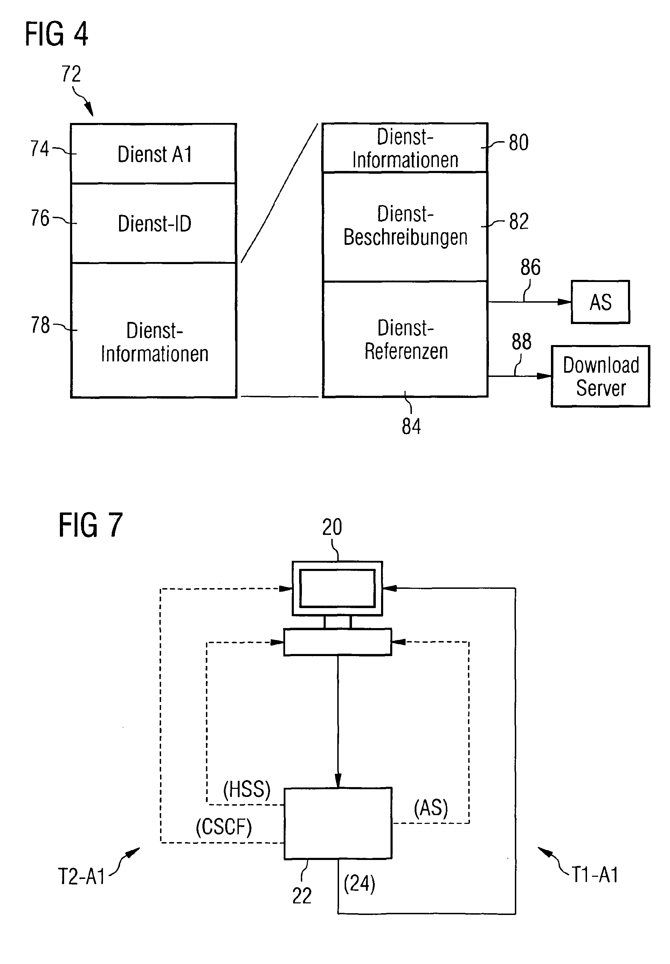

In der dazugehörigen TS 23.228 werden die Anforderungen auf die Netzarchitektur der IMS-Domäne konkretisiert (Abschnitt 4.2 "IMS services concepts"). Es werden Verbindungswege zwischen Mobilfunkendgerät und Service-Plattform (bspw. einem Applikationsserver) durch das Mobilfunknetz festgelegt, vgl. etwa die Fig. 4-1, 4-2, sowie die Steuerung der Dienstnutzung durch den zentralen Netzknoten in der IMS-Domäne, die CSCF ("Call Session Control Function"), definiert.

Offen bleibt jedoch, wie die Vorgaben der TS 22.228 hinsichtlich beschleunigter Einrichtung und Bereitstellung von Diensten ("rapid service creation and deployment", Kapitel 6, zweite Zeile nach der Überschrift) konkret erreicht werden können. Den Autoren dieses Dokuments sind keine derartigen Verfahren bekannt.

Somit besteht die Aufgabe der vorliegenden Erfindung darin, ein Verfahren anzugeben, das die Einrichtung und Bereitstellung von Diensten in einem Mobilfunknetz, insbesondere UMTS-Netz, auf schnelle und einfache Weise erlaubt, sowie eine entsprechende Administrationseinrichtung vorzuschlagen

Diese Aufgabe wird durch ein Verfahren mit den Merkmalen des Anspruchs 1 sowie ein Administrationseinrichtung mit den Merkmalen des Anspruchs 10 gelöst.

Ein wesentlicher Gedanke der Erfindung besteht darin, ein universelles Dienstprofil vorzusehen. Dieses stellt eine allgemeingültige Formatvorlage mit Datenfeldern zur Spezifikation der Eigenschaften eines beliebigen Dienstes bereit. Es kann zwingende und optionale Datenfelder geben. Mindestens ein zwingendes Datenfeld ist ein Server-Datenfeld, in dem für eine konkrete Dienstbeschreibung eine Zugriffsadresse des Applikationsservers anzugeben ist, der zur Dienstnutzung bereit steht.

Das universelle Dienstprofil ist eine bestimmte Art von Formatvorlage, die bei der Erstellung einer Dienstbeschreibung für einen beliebigen Dienst des betreffenden Netzes heranzuziehen ist. Das universelle Dienstprofil gibt die zu beschreibenden Eigenschaften und anzuwendenden Richtlinien für den einzurichtenden Dienst vor. In jedem universellen Dienstprofil spiegelt sich die Konfiguration des Netzes wider, für welches das Profil verwendet wird. Dies gilt beispielsweise für Policy-Informationen wie Vergebührungsvorschriften, Sicherheits- oder QoS-Mechanismen.

Ein bestimmter Dienst wird konkret eingerichtet, indem aus dem vorgegebenen universellen Dienstprofil eine Dienstbeschreibung des Dienstes in einer Administrationseinrichtung des Mobilfunknetz durch eine entsprechende Einrichtungsanwendung bzw. ein Einrichtungsmodul erstellt wird. Die erstellte Dienstbeschreibung wird in Zuordnung zum Mobilfunknetz gespeichert. Bei der Erstellung ist im Server-Datenfeld der Dienstbeschreibung die Zugriffsadresse des Applikationsservers zu spezifizieren.

Ein derart eingerichteter Dienst kann sodann zur Nutzung durch den Benutzer bereitgestellt werden, indem eine Referenz, welche die in der Dienstbeschreibung abgelegte Zugriffsadresse des Applikationsservers betrifft, dem Benutzer oder dem Mobilfunkendgerät zugeordnet wird.

Bevorzugt weist das universelle Dienstprofil als zwingenden Bestandteil ein Netzwerk-Beschreibungsfeld zur Spezifikation von Referenzen auf Netzeinrichtungen des Mobilfunknetzes auf, die für den Dienst anzupassen sind. In diesem Beschreibungsfeld ist auch das Server-Datenfeld anzuordnen. Optional kann das universelle Dienstprofil ein oder mehrere Endgerät-Beschreibungsfelder zur Spezifikation von Eigenschaften des Mobilfunkendgerätes aufweisen. Hierdurch kann ein konkreter Dienst automatisch für eine Mehrzahl von Endgeräten eingerichtet und bereitgestellt werden.

Optional können andere Dienstbeschreibungen referenziert werden, die einen vergleichbaren Dienst, aber über einen anderen Applikationsserver betreffen.

In den Beschreibungsfeldern können Softwaremodule angegeben werden, d.h. diese sind entweder unmittelbar als Teil der Dienstbeschreibung abgegelegt, oder es wird auf den Ort, an dem die Module gespeichert sind verwiesen bzw. referenziert. Bei der Bereitstellung des Dienstes werden die Softwaremodule an die im Netzwerk-Beschreibungsfeld referenzierten Netzeinrichtungen und ggf. an das im Endgerät-Beschreibungsfeld spezifizierte Endgerät übermittelt und auf diesen Einrichtungen installiert.

Vorteilhaft kann die Diensteinrichtung und -bereitstellung auf besonders einfache Weise automatisiert werden, wenn das universelle Dienstprofil und die daraus erstellte Dienstbeschreibung in Form einer für maschinelle Bearbeitung vorgesehenen Syntax zur Spezifikation von Informationen über verteilte Einrichtungen in einem Netz, insbesondere RDF ("Ressource Description Framework", erstellt ist bzw. wird. RDF ist eine von der W3C ("World Wide Web Consortium") standardisierte Sprache zur Identifikation von Datenverarbeitungseinrichtungen in einem Netzwerk.

Die Informationen im universellen Dienstprofil wie in den Dienstbeschreibungen können im Format von XML ("eXtensible Markup Language") repräsentiert sein, es können jedoch auch andere Formen der Darstellung gewählt werden.

Die bei der Bereitstellung erzeugte Referenz auf den für die Dienstnutzung erforderlichen Applikationsserver kann in einer Netzeinrichtung des Mobilfunknetzes zur Verwaltung benutzerbezogener Daten, insbesondere im HSS eines UMTS-Netzes, in Zuordnung zu den Daten des Benutzers gespeichert sein. Ebenso ist es denkbar, dass die Referenz die Zugriffsadresse selbst angibt und bei der Bereitstellung des Dienstes an das Mobilfunkendgerät übermittelt wird.

Das universelle Dienstprofil kann die Spezifikation eines Dienstauslösers bzw. Service-Triggers in einer Dienstbeschreibung vorsehen. Ein solcher wird verwendet, um bei der Bereitstellung eines Dienstes für einen Benutzer einen geeigneten Eintrag im Benutzer-Datensatz in einem HSS zu erzeugen.

Mit der Erfindung entfällt die Notwendigkeit, jeden neuen Dienst einzeln (und überwiegend manuell) einzurichten und bereitzustellen. Die Erfindung ermöglicht es dem Mobilfunknetzbetreiber, (vorkonfigurierte) Dienste nur noch über ein universelles Dienstprofil einzurichten, wobei das universelle Dienstprofil in allgemeiner Form die Beschreibung der Eigenschaften jedes Dienstes vorgibt.

Somit kann der Betreiber einen Dienst oder auch eine Vielzahl von Diensten automatisiert einrichten. Die Erstellung einer Dienstbeschreibung aus dem universellen Dienstprofil kann durch ein einmalig von einem Ausrüster bereitgestelltes Tool bzw. Werkzeug auf einer Administrationseinrichtung ablaufen. Der Administrator kann entweder zur Eingabe konkreter Werte für die durch das universelle Dienstprofil vorgegebenen, zu spezifizierenden Datenfelder aufgefordert werden. Oder er automatisiert auf einfache Weise auch diese Eingaben, etwa durch Erstellung eines (Batch-) Skriptes in einer einfachen Makrosprache.

Informationen über Dienste und deren Eigenschaften werden in sogenannten "Service Announcements" in Netzen und zu den Benutzern transportiert. Der Transport erfolgt bspw. über CBS (Cell Broadcast Services"), Push-Mechanismen verschiedenster Art oder auch die Bekanntgabe von Zugriffsadressen (URLs). Hierbei wird auf die in der Dienstbeschreibung abgelegten Informationen zur Dienstbeschreibung zurückgegriffen. Bspw. kann vorteilhaft eine in der Dienstbeschreibung spezifizierte Zugriffsadresse für einen Download-Server mitgeliefert werden, auf dem Client-Software für die Endgeräte bereitgestellt ist. Mit der Erfindung kann ein Werkzeug automatisch derartige Announcements erstellen und verteilen, da alle Dienstbeschreibungen gemäß der universellen Dienstprofils gebildet sind. Somit werden manuelle Tätigkeiten des Administrators überflüssig.

Die Bereitstellung eines Dienstes für einen Benutzer kann auf ähnlich einfache Weise automatisiert erfolgen. Dies ermöglicht es insbesondere, auf einfache Weise einen Dienst gleichzeitig für eine Vielzahl von Benutzern bereitzustellen.

Soll ein bereits eingerichteter und bereitgestellter Dienst geändert oder erweitert werden, ist auch dies auf einfache Weise über ein einziges Werkzeug möglich, indem in der Dienstbeschreibung entsprechende der vorgegebenen Datenfelder angepasst werden und ggf. geänderte Softwaremodule verteilt und installiert werden. Als derartiges Werkzeug kann bspw. das Bereitstellungsmodul einer erfindungsgemäß ausgebildeten Administrationseinrichtung ausgebildet sein.

Weitere Aspekte, Vorteile und Zweckmäßigkeiten ergeben sich aus den Unteransprüchen sowie der nachfolgenden Beschreibung eines Ausführungsbeispiels der Erfindung anhand der beigefügten Figuren, von denen zeigen:
- Fig. 1: ein schematisierte Darstellung eines UMTS-Netzes mit einer erfindungsgemäß ausgebildeten Adminstrationseinrichtung;
- Fig. 2: in Form eines funktionellen Blockschaltbildes die erfindungswesentlichen Komponenten der Administrationseinrichtung aus der Fig. 1;
- Fig. 3: den Aufbau eines universellen Dienstprofils gemäß einem Ausführungsbeispiel der Erfindung;
- Fig. 4: eine schematische Darstellung einer Dienstbeschreibung, die aus dem universellen Dienstprofil der Fig. 3 hervorgeht;
- Fig. 5: ein Beispiel der Referenzierung von Diensten in Benutzerprofilen gemäß der Erfindung;
- Fig. 6: analog zur Fig. 5 ein alternatives Beispiel eines Referenzierungsschemas;
- Fig. 7: in Form einer Prinzipskizze eine Anordnung mit der Administrationseinrichtung der Fig. 1, 2 zum Testen und Simulieren der Einrichtung und Bereitstellung von Diensten.

In allen Figuren bezeichnen gleiche Bezugszeichen gleiche oder gleichwirkende Elemente.

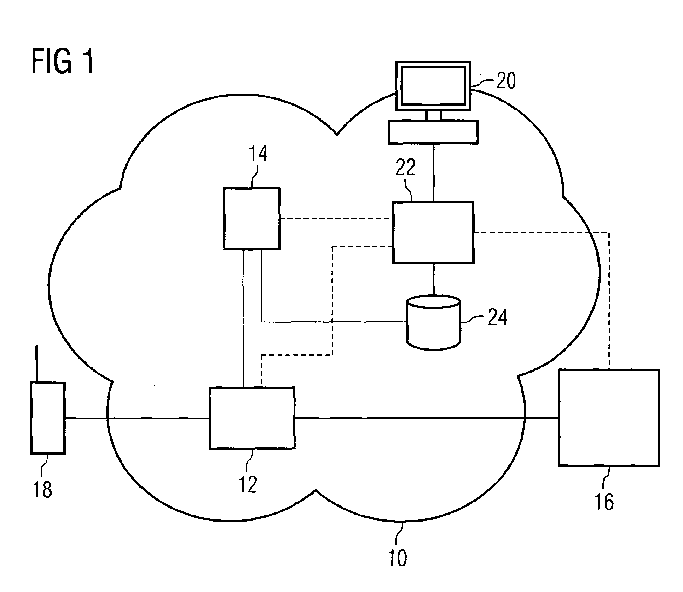

In Fig. 1 sind wesentliche Elemente eines UMTS-Netzes 10 schematisch dargestellt. Zentraler Netzknoten ist eine S("Serving")-CSCF 12 in der IMS-Domäne (nicht gesondert eingezeichnet, vgl. die Service-Architektur der TS 23.228, Abschnitt 4.2.3) des Netzes 10. Der CSCF 12 ist ein HSS 14 zugeordnet, in dem benutzerbezogene Daten von Benutzern, d.h. den Kunden des Betreibers des Netzes 10, verwaltet werden.

Auf einem Applikationsserver 16 liegt eine Serverfunktionalität für eine Multimediaapplikation vor. Die entsprechenden Daten, beispielsweise Video- und Audiodaten für eine mit Ton versehene Filmsequenz, sind ebenfalls auf dem Server 16 gespeichert.

Damit ein Benutzer einen entsprechenden Dienst A1 (s. die folgenden Figuren) zum Herunterladen von Multimediadaten nutzen kann, muss zunächst im Netz 10 dieser Dienst A1 eingerichtet werden, d.h. es muss die CSCF 12 zur Steuerung und Weiterleitung von Datenströmen vom Server 16 auf ein Mobilfunkendgerät 18 des Benutzers vorbereitet werden. Neben der CSCF 12 sind eine Vielzahl weiterer Netzeinrichtungen im Netz 10 entsprechend anzupassen, diese werden aber aus Gründen der Übersichtlichkeit in den Figuren und der weiteren Beschreibung nicht berücksichtigt.

Nachdem der Dienst A1 eingerichtet ist, muss er für den Benutzer des Dienstes A1 bereitgestellt werden. Hierzu muss das Profil des Benutzers im HSS 14 administriert werden. Bei einer Dienstanforderung durch das Endgerät 18 richtet die CSCF 12 eine Anfrage an das HSS. Über die Auswertung der benutzerbezogenen Einträge wird im HSS ermittelt, ob der Benutzer zur Nutzung des Dienstes A1 berechtigt ist und ggf. welche Dienstgüte (QoS) für den Benutzer zu gewährleisten ist. Zwingend erforderlich ist ferner die Ermittlung des den Dienst A1 letzlich erbringenden Servers, das ist im Beispiel der Applikationsserver 16.

Die entsprechenden Informationen werden vom HSS 14 an die CSCF 12 übermittelt, die sodann den Verbindungsweg für den Datenstrom zwischen dem Server 16 und dem Endgerät 18 mit der vereinbarten QoS und ggf. weiteren Eigenschaften (z.B. Verschlüsselung) aufbaut, so dass der Benutzer des Endgerätes 18 den Dienst nutzen, d.h. eine Darstellung der Multimediadaten verfolgen kann.

Damit der Benutzer den Dienst A1 nutzen kann, muss auf dem Endgerät 18 (auch gemäß der 3GPP-Terminologie als UE für "U-ser Equipment" bezeichnet) bei der Bereitstellung eine Client-Software installiert werden, die bspw. die obenerwähnte Dienstanforderung erzeugt.

Zur Wartung und Pflege des Netzes 10 werden Administrationseinrichtungen benutzt, von denen eine als OAM-Terminal 20 in Fig. 1 eingezeichnet ist. Es handelt sich um einen Arbeitsplatz, an dem ein Operator oder Administrator des Netzes 10 Befehle zur Konfiguration der CSCF 12 und HSS 14 eingeben kann. Auch die Einrichtung und Bereitstellung von Diensten wird herkömmlich über ein Terminal wie das Terminal 20 ausgeführt. Hierbei fallen zahlreiche manuell oder überwiegend manuell auszuführende Arbeitsschritte an, wie sie weiter oben angedeutet wurden.

Erfindungsgemäß liegt nun in dem Netz 10 ferner eine Administrationseinrichtung 22 zur Einrichtung und Bereitstellung von Diensten vor. Diese ist als eigenständige Einheit eingezeichnet, kann jedoch auch ein Teil des OAM-Terminals 20 sein oder verteilt im OAM-Terminal 20 und HSS 14 vorliegen. Obwohl das OAM-Terminal 20 in Fig. 1 zur Klarheit der Darstellung nur mit der erfindungsgemäßen Administrationseinrichtung 22 verbunden ist, kann das Terminal 20 zahlreiche weitere Aufgaben in direkter Verbindung mit den weiteren Netzeinrichtungen des Netzes 10 durchführen; diese stehen jedoch nicht in unmittelbarem Bezug zur Erfindung. Darum beschränkt sich die Rolle des OAM-Terminals 20 in der weiteren Beschreibung auf die eines Eingabeterminals, um die Administrationseinrichtung 22 zu bedienen bzw. anzusteuern.

Über gestrichelte Linien sind die Schnittstellen der Administrationseinrichtung 22 mit den weiteren Einheiten des Netzes 10 und mit dem Applikationsserver 16 angedeutet.

Der Administrationseinrichtung 22 zugeordnet liegt eine Dienstbeschreibungs-Speichereinrichtung 24 im Netz 10 vor, auf der die gemäß dem erfindungsgemäßen Verfahren erstellten Dienstbeschreibungen abgespeichert werden.

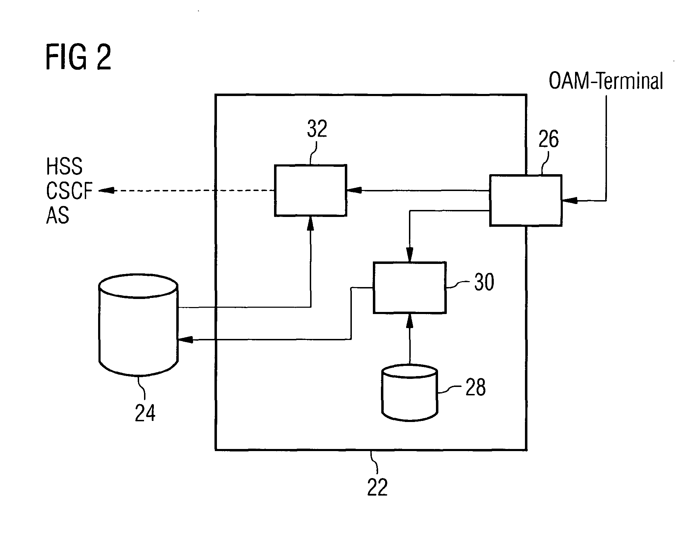

Fig. 2 ist eine schematische Darstellung der wesentlichen Komponenten der Administrationseinrichtung 22. Ein Steuermodul 26 dient der Entgegennahme von Signalen, die Administrationsbefehle repräsentieren, vom OAM-Terminal 20. Bei den Befehlen kann es sich um manuelle Eingaben vom Administrator handeln oder um eine Folge von Befehlen, wie sie bspw. durch ein Makro oder ein Batch-Skript repräsentiert werden. Das Steuermodul 26 wertet die empfangenen Signale aus und steuert durch einrichtungsinterne Steueranweisungen die weiteren Module der Administrationseinrichtung 22 an.

Ein Speicher 28 dient zur Speicherung des universellen Dienstprofils gemäß der Erfindung. Das Profil ist fest im Speicher 28 abgelegt und kann nicht verändert werden.

Ein Einrichtungsmodul 30 wird durch eine Einrichtungs-Steueranweisung vom Steuermodul 26 veranlasst, das universelle Dienstprofil aus dem Speicher 28 einzulesen. Das universelle Dienstprofil gibt eine Mehrzahl von zunächst mit Platzhaltern besetzten Datenfeldern vor. Das Modul 30 erstellt aus dem universellen Dienstprofil sodann eine Dienstbeschreibung. Dabei wird jedes der vorgegebenen Datenfelder zur Spezifikation einer Eigenschaft des Dienstes verwendet.

Beispielsweise ist ein Server-Datenfeld ist für die Spezifikation der Zugriffsadresse eines Applikationsservers vorgesehen. Das Einrichtungsmodul 30 bestimmt den Platzhalter für das Server-Datenfeld in der zu erstellenden Dienstbeschreibung und entnimmt aus der Einrichtungs-Steueranweisung vom Steuermodul 26 die Zugriffsadresse des Applikationsservers 16 und ersetzt den Platzhalter im Server-Datenfeld mit der Zugriffsadresse.

Nach der Spezifikation aller Datenfelder gemäß der Einrichtungs-Steueranweisung wird die vollständige Dienstbeschreibung in der Dienstbeschreibungs-Speichereinrichtung 28 abgespeichert.

Die Administrationseinrichtung 22 enthält ferner ein Bereitstellungsmodul 32. Dieses wird über eine Bereitstellungs-Steueranweisung vom Steuermodul 26 angesteuert. In Reaktion auf die Steueranweisung liest das Bereitstellungsmodul 32 die Dienstbeschreibung aus der Speichereinrichtung 24 ein. Das Bereitstellungsmodul erzeugt eine Referenz auf die im Server-Datenfeld der Dienstbeschreibung spezifizierte Zugriffsadresse des Applikationsservers. Diese Referenz wird an die CSCF 12 (vgl. Fig. 1) gesendet. Die CSCF 12 leitet die Referenz an das Endgerät 18 weiter.

Die Dienstbeschreibungs-Speichereinrichtung 24 ist hier als externe Speichereinrichtung beschrieben, sie kann jedoch ebenso ein Teil der Adminstrationseinrichtung 22, des OAM-Terminals 20 oder des HSS 14 sein.

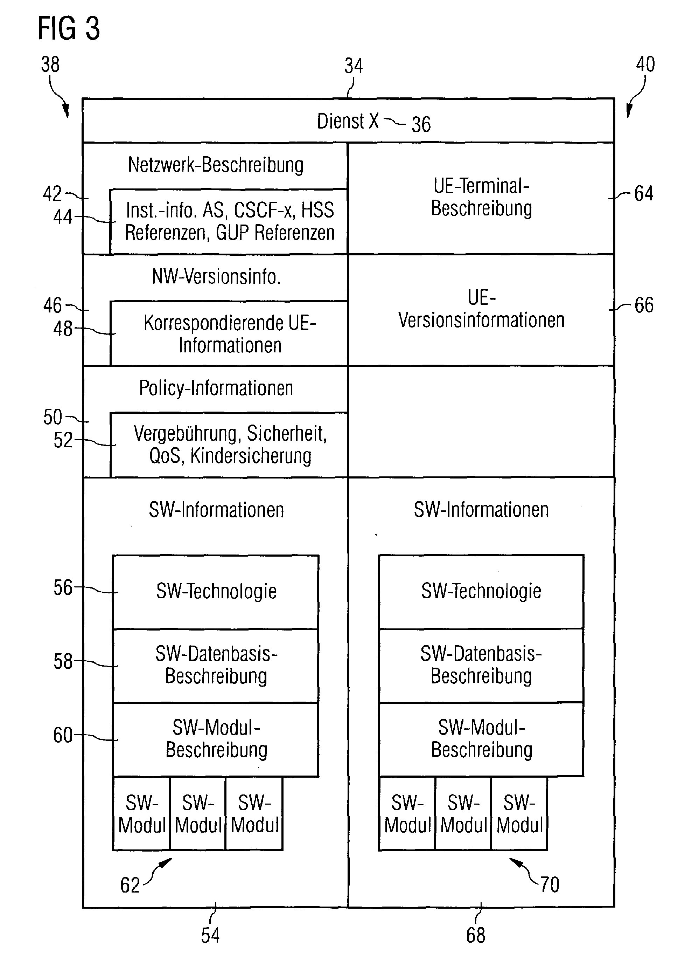

Die Bereitstellung und Einrichtung des Dienstes A1 mithilfe der erfindungsgemäßen Einrichtung 22 wird weiter unten genauer diskutiert. Zunächst wird anhand der Fig. 3 das im Speicher 28 der Administrationseinrichtung für das Netz 10 gemäß der Erfindung fest vorgegebene, universelle Dienstprofil 34 beschrieben.

Das Dienstprofil 34 ist eine Formatvorlage, die bei der Erstellung einer Dienstbeschreibung für einen beliebigen Dienst des Netzes 10 heranzuziehen ist. Das Dienstprofil 34 umfasst eine Vielzahl von Datenfeldern, von denen in der Fig. 2 einige Datenfelder 36-70 eingezeichnet sind. Jedes Datenfeld kann weitere Datenfelder umfassen. Die Länge der Datenfelder (in Bits) ist im universellen Dienstprofil ebenfalls festgelegt, aber in der Fig. 3 der Übersichtlichkeit wegen nicht eingezeichnet. Von den im universellen Dienstprofil 34 vorgesehenen Datenfeldern müssen einige zwingend bei der Erstellung eines Dienstes spezifiziert werden, andere Datenfelder sind optional.

Ein erstes, zwingendes Datenfeld 36 ist für die Bezeichnung des Dienstes vorgesehen. Weiter sieht das Dienstprofil 34 zwingend für jede Dienstbeschreibung ein Datenfeld 38 für Netzwerk-Beschreibungen vor. Ein weiteres Datenfeld 40 für die Beschreibung der Eigenschaften von Endgeräten ist optional, d.h. eine Dienstbeschreibung für einen konkreten Dienst kann kein, ein oder mehrere Endgerät-Beschreibungsfeld/er aufweisen.

Mit einem Header-Datenfeld 42 wird der Beginn des Netzwerk-Beschreibungsfeldes 38 markiert. Nachfolgende Datenfelder 44 sind für Installationsinformationen vorgesehen, die sich auf Netzeinrichtungen beziehen, die durch die Dienstbereitstellung betroffen sind, etwa weil auf ihnen Softwaremodule zu installieren sind. Im universellen Dienstprofil 34 sind Datenfelder für den Applikationsserver (AS, zwingend), die CSCF (optional) das HSS (optional) und das Benutzerprofil (GUP, "General User Profile, vgl. TS 22.240, optional) vorgesehen. In diesen Datenfeldern 44 sind auch Referenzen auf die betroffenen Netzeinrichtungen anzugeben. So ist in dem den Applikationsserver betreffenden Datenfeld in der Dienstbeschreibung insbesondere die Zugriffsadresse des Servers zu spezifizieren.

Ein optionales Datenfeld 46 ist zur Spezifikation von Versionsinformationen vorgesehen. Ist das Datenfeld 46 vorhanden, sind in Unterfeldern 48 Versionsangaben zu spezifizieren. Ebenso kann hier spezifiziert werden, welche Modulversionen auf Einrichtungen im Netz mit Softwareversionen auf Endgeräten kooperieren. Für den Fall inkompatibler SW-Versionen kann eine Angabe spezifiziert werden, die eine erforderliche Aktualisierung betrifft.

Ein optionales Datenfeld 50 ist zur Spezifikation von Policy-Informationen vorgesehen. Ist das Datenfeld 50 vorhanden, muss mindestens ein Unterfeld 52 vorhanden sein. Das hier beispielhaft geschilderte universelle Dienstprofil 26 sieht vier optionale Datenfelder 52 vor, nämlich für Vergebührungs-, Sicherheits-, QoS- und Kindersicherungs-Datenfelder. Das Sicherheits-Datenfeld betrifft etwa DRM("Digital Rights Management")-Informationen.

Das letzte optionale Datenfeld 54 ist zur Spezifikation von Software-Informationen vorgesehen, d.h. Angaben zu der Software, die auf den in den Feldern 44 angegebenen Netzeinrichtungen zu installieren sind. Ist das Datenfeld 54 vorhanden, muss dieses zwingend drei Unterfelder enthalten. Im Datenfeld 56 ist die für die Software-Module verwendete Software-Technologie zu spezifizieren, also beispielsweise die Information "Java J2SE 5.0" zu repräsentieren. In den Datenfeldern 58, 60 sind in entsprechender Weise Informationen zur Software-Datenbasis und zur Modulbeschreibung anzugeben. Im Datenfeld 60 muss in einer Dienstbeschreibung insbesondere angegeben werden, wie viele SW-Module nachfolgend spezifiziert werden.

Mindestens ein Datenfeld 62 für ein Software- bzw. SW-Modul muss spezifiziert werden. Hierbei kann das SW-Modul selbst in dem Datenfeld abgelegt sein, oder das Datenfeld 62 enthält einen Verweis bzw. eine Referenz auf einen Server, auf dem das SW-Modul gespeichert ist.

Das Endgerät-Beschreibungsfeld 40 enthält, falls vorhanden, zwingend ein Headerfeld 64, welches den Beginn (und die Länge) des Endgerät-Beschreibungsfeldes 40 angibt. In einem optionalen Datenfeld 66 können Versionsinformationen betreffend das Endgerät (UE), also die verwendete Hardware und Software (-plattform) angegeben werden.

Das Endgerät-Beschreibungsfeld 40 kann bei der Erstellung einer Dienstbeschreibung aus dem universellen Dienstprofil 34 mehrfach in die Dienstbeschreibung eingefügt werden. Somit kann der entsprechende Dienst verschiedene Endgeräte (konfigurationen) unterstützen. Um einen Dienst für Endgeräte mit den Betriebssystemen Symbian OS, Windows CE, Linux PDA und andere bzw. unbekannte (proprietäre) Betriebssysteme nutzbar zu machen, ist jeweils ein Beschreibungsfeld für eines dieser Betriebssysteme anzulegen.

Das optionale Datenfeld 68 ist zur Spezifikation von Software-Informationen vorgesehen, d.h. Angaben zu der Software, die auf im Feld 66 angegebenen Endgerät-Versionen zu installieren sind. Der Aufbau des Datenfeldes entspricht demjenigen des Datenfeldes 54. Insbesondere ist in mindestens einem Datenfeld 70 ein SW-Modul zu spezifizieren. Hierbei kann das SW-Modul selbst in dem Datenfeld abgelegt sein, oder das Datenfeld 70 enthält einen Verweis bzw. eine Referenz auf einen Download-Server, auf dem das SW-Modul gespeichert ist. In dem Datenfeld 68 können optional weitere Informationen zur Download-Software spezifiziert werden, bspw. Kompatibilitätsangaben für die Client-Software.

Je nach den Anforderungen in einem Mobilfunknetz können Datenfelder in anderer Weise als bei dem hier geschilderten Beispiel im universellen Dienstprofil mit dem Attribut 'zwingend' oder 'optional' versehen werden.

In der Fig. 4 ist die Dienstbeschreibung 72 für den oben erwähnten Dienst A1 skizziert. Die Dienstbeschreibung 72 wird während der Einrichtung des Dienstes A1 im Einrichtungsmodul 30 aus dem universellen Dienstprofil 34 erstellt.

Die Dienstbeschreibung 72 für den Dienst A1 umfasst eine Vielzahl von Datenfeldern, die aus den Datenfeldern des universellen Dienstprofils hervorgehen, jedoch statt mit Platzhaltern mit konkreten Informationen versehen sind. Einige Datenfelder 74 - 84 sind eingezeichnet. Alle Datenfelder werden in Zuordnung zueinander in der Dienstbeschreibungs-Speichereinrichtung 24 gespeichert. Jedes Datenfeld kann weitere Datenfelder umfassen.

Das Datenfeld 74 dient der Bezeichnung des Dienstes. Ein Datenfeld 76 enthält eine Dienst-ID, die den Dienst A1 im Netz 10 eindeutig identifiziert. Der Zweck der Dienst-ID wird weiter unten genauer erläutert. Die Dienst-ID sollte nach einem allgemein genutzten Mechanismus gebildet sein, damit die ID durch andere Verfahren im Netz 10 genutzt werden kann.

Ein weiteres Datenfeld 78 dient der Angabe von Dienst-Informationen, die die Eigenschaften des Dienstes spezifizieren. Auf der rechten Seite der Fig. 4 ist das Datenfeld 78 genauer dargestellt. Nach einem Header-Datenfeld 80 zur Kennzeichnung des Beginns des Datenfeldes 78 folgt ein Datenfeld 82, das die eigentliche Beschreibung des Dienstes enthält. Dieses Feld 82 ist zwar optional, für den Dienst A1 ist bei der Erstellung der Dienstbeschreibung 72 das Feld 82 jedoch angelegt und mit Informationen versehen worden.

In einem weiteren, zwingenden Datenfeld 84 werden Referenzen für den Dienst spezifiziert. Die Dienstbeschreibung 72 für den Dienst A1 enthält, wie in Fig. 4 angedeutet wird, zwei Referenzen 86, 88. Mit der ersten, zwingenden Referenz 86 wird der Applikationsserver 16 (vgl. Fig. 1) für den Dienst A1 spezifiziert. Bei der Referenz 86 handelt es sich um eine Adressbezeichnung für den Server 16, nämlich http://application Al.server.com . In gleicher Weise wird durch die optionale Referenz 88 ein Download-Server spezifiziert (in Fig. 1 nicht eingezeichnet). Auf dem durch die Referenz 88 bezeichneten Download-Server liegt die Client-Software zum Download bereit, die auf dem Endgerät 18 bei der Bereitstellung des Dienstes A1 für den Benutzer zu installieren ist.

Der Dienst A1 ist eingerichtet, sobald die Dienstbeschreibung 72 für den Dienst A1 auf der Dienstbeschreibungs-Speichereinrichtung 24 abgelegt ist. Der Dienst A1 kann jetzt dem Benutzer zur Nutzung angeboten werden. Möchte der Benutzer den Dienst nutzen, muss dieser für ihn bereitgestellt werden.

Hierbei müssen zunächst die Einrichtungen im Netz 10 für die Erbringung des Dienstes konfiguriert werden. Dies kann bereits bei der Einrichtung des Dienstes geschehen, spätestens aber bei der ersten Bereitstellung des Dienstes für einen Benutzer. Hier wird angenommen, dass die Konfiguration der Netzeinrichtungen bei der (ersten) Bereitstellung des Dienstes erfolgt.

Die Konfiguration wird durch das Bereitstellungsmodul 32 der Administrationseinrichtung vorgenommen. Zur Konfiguration werden aus der Dienstbeschreibung die Referenzen auf die durch den Dienst betroffenen Netzelemente entnommen. Gleichzeitig werden die SW-Module entnommen. Die SW-Module werden an die referenzierten Netzeinrichtungen, i.w. die CSCF 12 im Netz 10, versendet und dort installiert. Derartige Verfahren sind dem Fachmann bekannt.

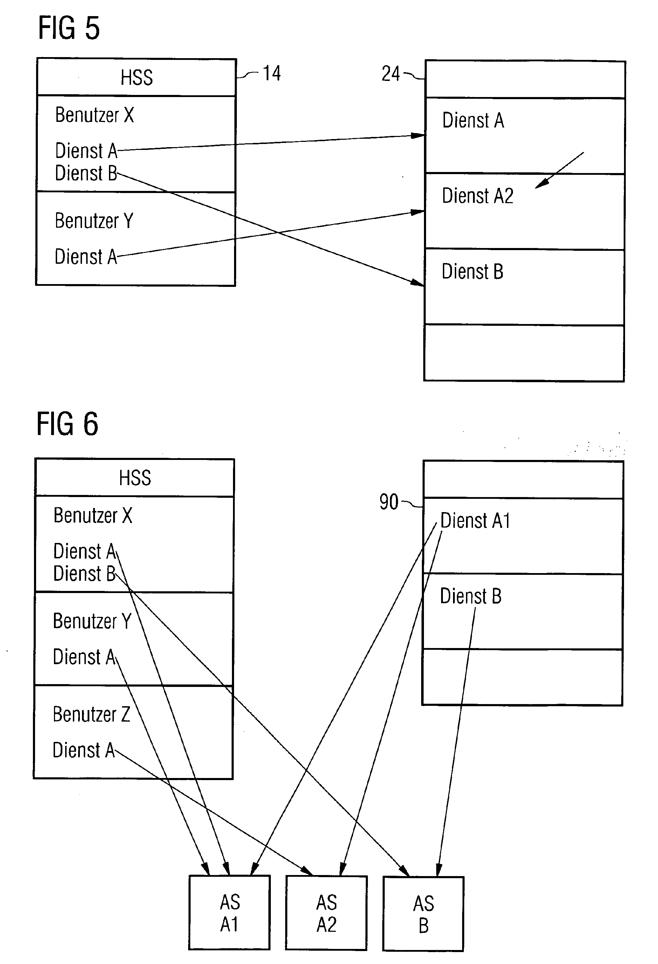

Die Administration des Benutzerprofils im HSS 14 zur Nutzung von Diensten wurde bereits oben anhand der Fig. 1 besprochen. In der Fig. 5 ist ein Beispiel für benutzerbezogene Einträge im HSS 14 gezeigt. Es liegen Datensätze für zwei Benutzer X und Y im HSS 14 vor. Der Benutzer X ist der Benutzer des Endgerätes 18 in Fig. 1 und hat die Berechtigung zur Nutzung zweier Dienste A, B; der Benutzer Y hat die Berechtigung für den Dienst A.

Bei einer Dienstanforderung vom Endgerät 18 wertet das HSS 14 in Reaktion auf eine entsprechende Anfrage vom CSCF 12 den Datensatz für den Benutzer X aus und erkennt, dass der Benutzer X zur Nutzung des Dienstes A berechtigt ist.

Der Dienst A1 wurde für den Benutzer X im HSS unter der Bezeichnung "Dienst A" bereitgestellt. Dabei wurde durch das Bereitstellungsmodul 32 in der Administrationseinrichtung 22 als Referenz die Dienst-ID der Dienstbeschreibung 72 verwendet und an das HSS 14 gesendet.

Der Eintrag für den Dienst A referenziert somit über die Dienst-ID auf die Dienstbeschreibung des Dienstes A1 in der Speichereinrichtung 24. Auf diese greift das HSS 14 zu und entnimmt der Dienstbeschreibung 72 (vgl. Fig. 4) die Zugriffsadresse des Applikationsservers 16. Handelt es sich um die erste Zugriffsanforderung des Endgerätes 18, entnimmt das HSS 14 gleichzeitig die Zugriffsadresse des Download-Servers, auf dem die Client-Software für das Endgerät 18 bereitgestellt ist. Diese Daten werden über das CSCF 12 an das Endgerät 18 weitergeleitet, wie oben beschrieben.

Bei dem hier geschilderten Ausführungsbeispiel verweist eine Dienstbeschreibung auf genau einen Applikationsserver (vgl. Fig. 4). Soll die Dienstnutzung für den Benutzer Y über einen anderen Applikationsserver erfolgen als für den Benutzer X, so ist eine entsprechende Dienstbeschreibung zu erstellen und in der Speichereinrichtung 24 abzulegen. Der Dienst A2 kann sich vom Dienst A1 aber auch in anderen Eigenschaften unterscheiden, so können etwa im Netzwerk-Beschreibungsteil die Policy-Informationen unterschiedlich gestaltet sein, etwa in den Vergebührungsinformationen oder den QoS-Bedingungen.

Die Dienste A1 und A2 sowie ggf. weitere Dienste können durch das Einrichtungsmodul 30 der Administrationseinrichtung 22 gleichzeitig eingerichtet werden.

Obwohl also der Benutzer Y Nutzungsrechte für den gleichen Dienst A hat wie der Benutzer X, verweist die Dienst-ID im HSS 14 für den Benutzer Y auf die Dienstbeschreibung für den Dienst A2 in der Speichereinrichtung 24, wie in Fig. 5 angedeutet.

In der Fig. 6 sind Benutzerdatensätze in einem HSS angedeutet, wie sie aus einem alternativen Verfahren der Diensteinrichtung und -bereitstellung gemäß der Erfindung resultieren. Hierbei kann in einer Dienstbeschreibung eine Mehrzahl von Applikationsservern referenziert werden. In dem Beispiel der Fig. 6 sind in der Dienstbeschreibung 90 für Dienst A zwei Applikationsserver A1, A2 angegeben.

Bei der Bereitstellung des Dienstes verwendet ein Bereitstellungsmodul in einer erfindungsgemäßen Administrationseinrichtung als Referenz auf den Applikationsserver dessen Zugriffsadresse. Diese wird an das HSS übergeben und von diesem im Benutzerdatensatz gespeichert. Somit ist bei der Bearbeitung einer Dienstanforderung kein Zugriff vom HSS zu den Dienstbeschreibungen erforderlich. Allerdings muss bei der Bereitstellung entschieden werden, welcher von der Mehrzahl von Applikationsservern durch den Benutzer verwendet werden soll. Dies kann im Bereitstellungsmodul anhand eines Round-Robin-Verfahrens, anhand zusätzlicher Informationen oder in Reaktion auf manuelle Eingaben eines Administrators über das OAM-Terminal geschehen.

Eine wie bei dem in Fig. 6 gezeigten Beispiel gebildete Referenz, die die in der Dienstbeschreibung abgelegte Zugriffsadresse des Applikationsservers repräsentiert, kann bei der Bereitstellung des Dienstes auch direkt an das Endgerät übermittelt werden. Dann ist ein Eintrag in den Datensatz des Benutzers, wie in den Fig. 5 und 6 gezeigt, unter Umständen entbehrlich. In diesem Fall wäre das Bereitstellungsmodul in der erfindungsgemäßen Administrationseinrichtung ausgebildet, um die Referenz auf die Zugriffsadresse des Applikationsservers an einen zentralen Netzknoten zur Weiterleitung an ein Mobilfunkendgerät des Benutzers zu senden, insbesondere an eine CSCF.

Das in den Ausführungsbeispielen beschriebene erfindungsgemäße Bereitstellungsmodul kann ebenso dazu ausgebildet sein, um eine bereits existierende Dienstbeschreibung und/oder die entsprechenden benutzerbezogene Daten zu administrieren. Somit kann ein Dienst nachträglich in seinen Eigenschaften verändert werden, bspw. kann eine verbesserte Dienstgüte in der Dienstbeschreibung oder ein anderer Applikationsserver spezifiziert werden. Ggf. sind weitere Schritte der ursprünglichen Bereitstellung zu wiederholen, etwa die Neuinstallation veränderter Software-Module auf den in der Dienstbeschreibung spezifizierten Netzeinrichtungen, dem Applikationsserver oder dem Endgerät des Benutzers.

In der Fig. 7 sind Anordnungen aus OAM-Terminal und erfindungsgemäßer Administrationseinrichtung schematisch dargestellt, wie sie zum Testen der Einrichtung und Bereitstellung eines Dienstes verwendet werden.

Um etwa die Einrichtung des oben beispielhaft diskutierten Dienstes A1 in einem Test T1-A1 zu testen, wird die Ausgabe der Administrationseinrichtung 22 über die Schnittstelle zur Speichereinrichtung 24 stattdessen auf das OAM-Terminal gelenkt. Die erstellte Dienstbeschreibung kann an einer Anzeige des OAM-Terminals ausgegeben und durch einen Administrator überprüft werden.

Eine Anordnung wie in Fig. 7 gezeigt ermöglicht somit, dass ein Dienst durch Eingaben über eine entsprechende Entwicklungsoberfläche am OAM-Terminal 20 entwickelt und sodann mit einer Konfiguration getestet und simuliert wird, die der tatsächlich im Mobilfunknetz vorliegenden Konfiguration entspricht. Die Parameter und Referenzen zur Netzwerkkonfiguration, wie sie bei der Erstellung der Dienstbeschreibung aus dem universellen Dienstprofil angelegt werden, entsprechen denen des realen Netzes. Alternativ können natürlich für Zwecke der Simulation und des Tests andere Parameter und Referenzen eingetragen werden, die mit dem tatsächlichen Netz in keinem Zusammenhang stehen.

In einem Test T2-A1 kann die Bereitstellung des Dienstes A1 getestet bzw. simuliert werden, indem die Ausgabe der Administrationseinrichtung 22 in Richtung auf das HSS, CSCF und ggf. den Applikationsserver auf das OAM-Terminal umgeleitet werden. Somit kann die Bereitstellung durch die Administrationseinrichtung 22 in einem Test-/Abnahmemodus und in einem Realbetriebsmodus erfolgen. Natürlich sind weitere Modi denkbar.

Die Umlenkung der Ausgaben der Administrationseinrichtung 22 erfolgt bevorzugt durch softwaretechnische Maßnahmen. Entsprechende Verfahren sind dem Fachmann bekannt. Beispielsweise kann ein Testmodul in der Administrationseinrichtung zum Testen des Einrichtungs- und Bereitstellungsmoduls vorgesehen sein (in Fig. 7 nicht eingezeichnet). Mit diesem können die Module einzeln getestet werden (Modultests), es können aber insbesondere die Einrichtung und die Bereitstellung eines Dienstes simuliert werden, ohne dass eine tatsächliche Einrichtung und Bereitstellung erfolgt. Die Vorteile dieser Vorgehensweise sind dem Fachmann ersichtlich.

Die hier dargestellten Anwendungsbeispiele stellen nur einige zweckmäßige Ausführungsformen der Erfindung dar. Darüber hinaus sind im Geltungsbereich der Erfindung, der ausschließlich durch die nachfolgenden Ansprüche angegeben wird, durch fachmännisches Handeln noch viele weitere Ausführungsformen denkbar.

## Patentansprüche

1. Verfahren zur Einrichtung und Bereitstellung von Diensten in einem Mobilfunknetz (10), insbesondere UMTS-Netz,
wobei bei einer Nutzung eines Dienstes (A1, A2, B) ein Mobilfunkendgerät (18) eines Benutzers über das Mobilfunknetz (10) auf einen Applikationsserver (AS, 16) zugreift, und
- ein bestimmter Dienst (A1) eingerichtet wird, indem aus einem vorgegebenen universellen Dienstprofil (34) eine Dienstbeschreibung (72) des Dienstes (A1) in einer Administrationseinrichtung (22) des Mobilfunknetz (10) erstellt und in Zuordnung zum Mobilfunknetz (10) gespeichert wird, wobei
- das universelle Dienstprofil (34) eine allgemeingültige Formatvorlage mit Datenfeldern (36-70) zur Spezifikation der Eigenschaften des oder jedes einzurichtenden Dienstes (A1, A2, B) ist, einschließlich eines Server-Datenfeldes (44) für die Spezifikation einer Zugriffsadresse des Applikationsservers,
- bei der Erstellung im Server-Datenfeld (84) der Dienstbeschreibung (72) die Zugriffsadresse (86) des Applikationsservers (AS, 16) spezifiziert wird
- und der Dienst (A1) zur Nutzung durch den Benutzer bereitgestellt wird, indem eine Referenz, welche die in der Dienstbeschreibung (72) abgelegte Zugriffsadresse des Applikationsservers (86) betrifft, dem Benutzer oder dem Mobilfunkendgerät (18) zugeordnet wird.

2. Verfahren nach Anspruch 1,
**dadurch gekennzeichnet, dass**
das universelle Dienstprofil (34) ein Netzwerk-Beschreibungsfeld (38) zur Spezifikation von Referenzen auf Netzeinrichtungen (12, 14) des Mobilfunknetzes (10) aufweist, die für den Dienst (A1) anzupassen sind.

3. Verfahren nach Anspruch 2,
**dadurch gekennzeichnet, dass**
bei der Erstellung der Dienstbeschreibung (72) im Netzwerk-Beschreibungsfeld (38) Softwaremodule (62) angegeben werden und bei der Bereitstellung des Dienstes (A1) die Softwaremodule (62) an die im Netzwerk-Beschreibungsfeld (38, 44) referenzierten Netzeinrichtungen (12, 14) übermittelt und auf diesen Netzeinrichtungen (12, 14) installiert werden.

4. Verfahren nach einem der vorhergehenden Ansprüche,
**dadurch gekennzeichnet, dass**
das universelle Dienstprofil (34) ein Endgerät-Beschreibungsfeld (40) zur Spezifikation von Eigenschaften des Mobilfunkendgerätes aufweist.

5. Verfahren nach Anspruch 4,
**dadurch gekennzeichnet, dass**
bei der Erstellung der Dienstbeschreibung (72) im Endgerät-Beschreibungsfeld (40) Softwaremodule (70) angegeben werden und bei der Bereitstellung des Dienstes (A1) die Softwaremodule (70) an das Mobilfunkendgerät (18) übermittelt und auf dem Mobilfunkendgerät (18) installiert werden.

6. Verfahren nach einem der vorhergehenden Ansprüche,
**dadurch gekennzeichnet, dass**
das universelle Dienstprofil (34) sowie die Dienstbeschreibung (72) in Form einer für maschinelle Bearbeitung vorgesehenen Syntax zur Spezifikation von Informationen über verteilte Einrichtungen in einem Netz (10), insbesondere RDF, erstellt ist bzw. wird.

7. Verfahren nach einem der vorhergehenden Ansprüche,
**dadurch gekennzeichnet, dass**
die auf die in der Dienstbeschreibung (72) abgelegte Zugriffsadresse (86) des Applikationsservers (AS) verweisende Referenz (Fig. 5) in einer Netzeinrichtung (14) des Mobilfunknetzes (10) zur Verwaltung benutzerbezogener Daten, insbesondere im HSS eines UMTS-Netzes, in Zuordnung zu den Daten des Benutzers gespeichert wird.

8. Verfahren nach einem der Ansprüche 1 bis 6,
**dadurch gekennzeichnet, dass**
die auf die in der Dienstbeschreibung (72) abgelegte Zugriffsadresse (86) des Applikationsservers (AS) verweisende Referenz die Zugriffsadresse selbst angibt und bei der Bereitstellung des Dienstes an das Mobilfunkendgerät (18) übermittelt wird.

9. Verfahren nach einem der vorhergehenden Ansprüche,
**dadurch gekennzeichnet, dass**
in der Dienstbeschreibung mehrere Zugriffsadressen für eine Mehrzahl von Applikationsservern spezifiziert sind (Fig. 6).

10. Administrationseinrichtung (22) zur Durchführung eines Verfahrens zur Einrichtung und Bereitstellung eines Dienstes in einem Mobilfunknetz (10), insbesondere UMTS-Netz, nach einem der vorhergehenden Ansprüche, mit
- einem Steuermodul (26), das ausgebildet ist, um in Reaktion auf empfangene Administrationsbefehle Steueranweisungen an weitere Module (30, 32) zu senden,
- einem Speicher (28) zur Speicherung eines universellen Dienstprofils (34) mit einer Mehrzahl von mit Platzhaltern besetzten Datenfeldern (36-70),
- einem Einrichtungsmodul (30), das ausgebildet ist, in Reaktion auf eine vom Steuermodul (26) gesendete Einrichtungs-Steueranweisung das universelle Dienstprofil (34) aus dem Speicher (28) einzulesen, aus dem universellen Dienstprofil (34) eine Dienstbeschreibung (72) zu erstellen, wobei jedes Datenfeld (36-70) zur Spezifikation einer Eigenschaft des Dienstes (A1) und ein Server-Datenfeld (44) für die Spezifikation der Zugriffsadresse eines Applikationsservers (AS) vorgesehen ist, und ferner ausgebildet ist, den Platzhalter für das Server-Datenfeld zu bestimmen und mit einer aus der Einrichtungs-Steueranweisung entnommenen Zugriffsadresse des Applikationsservers (AS, 16) zu ersetzen, und die Dienstbeschreibung (72) in einer der Administrationseinrichtung (22) zugeordneten Dienstbeschreibungs-Speichereinrichtung (24) abzuspeichern, und
- einem Bereitstellungsmodul (32), das ausgebildet ist, um in Reaktion auf eine Bereitstellungs-Steueranweisung vom Steuermodul (26) eine Referenz, welche die im Server-Datenfeld (84) der Dienstbeschreibung (72) spezifizierte Zugriffsadresse (86) des Applikationsservers (AS) betrifft, zu erzeugen und an eine Netzeinrichtung (12, 14) des Mobilfunknetzes (10) zu senden.

11. Administrationseinrichtung nach Anspruch 10,
**dadurch gekennzeichnet, dass**
das Bereitstellungsmodul (32) ausgebildet ist, um die Referenz auf die Zugriffsadresse (86) des Applikationsservers (AS) an eine Netzeinrichtung (14) des Mobilfunknetzes (10) zur Verwaltung benutzerbezogener Daten, insbesondere ein HSS eines UMTS-Netzes, zu senden.

12. Administrationseinrichtung nach Anspruch 10,
**dadurch gekennzeichnet, dass**
das Bereitstellungsmodul (32) ausgebildet ist, um die Referenz auf die Zugriffsadresse (86) des Applikationsservers (AS) an einen zentralen Netzknoten (12) zur Weiterleitung an ein Mobilfunkendgerät (18) des Benutzers zu senden, insbesondere an eine CSCF.

13. Administrationseinrichtung nach einem der Ansprüche 10 bis 12,
**dadurch gekennzeichnet, dass**
das Bereitstellungsmodul (32) ausgebildet ist, um in Reaktion auf die Bereitstellungs-Steueranweisung Referenzen auf Netzeinrichtungen (12, 14) sowie Softwaremodule aus der auf der Dienstbeschreibungs-Speichereinrichtung (24) gespeicherten Dienstbeschreibung (72) auszulesen und die Software-Module an die referenzierten Netzeinrichtungen (12, 14) zu übermitteln.

14. Administrationseinrichtung nach einem der Ansprüche 10 bis 13,
**dadurch gekennzeichnet, dass**
das Bereitstellungsmodul (32) ausgebildet ist, um die Dienstbeschreibung (72) und/oder benutzerbezogene Daten zu administrieren.

15. Administrationseinrichtung nach einem der Ansprüche 10 bis 14,
**gekennzeichnet durch**
ein Testmodul zum Testen des Einrichtungs- und Bereitstellungsmoduls (30, 32), insbesondere zum Simulieren der Einrichtung und Bereitstellung des Dienstes (72).

16. Administrationseinrichtung nach einem der Ansprüche 10 bis 15,
**dadurch gekennzeichnet, dass**
das Steuermodul (26) mit einem OAM-Terminal (20) zur Wartung von Einrichtungen des Mobilfunknetzes (10) verbunden ist, um von diesem Administrationsbefehle zu empfangen.
